# EUROPÄISCHE PATENTANMELDUNG

(11) **EP 0 887 216 A2**
(43) Veröffentlichungstag der Anmeldung: **30.12.1998**
(21) Anmeldenummer: 98108694.5
(22) Anmeldetag: 13.05.1998
(51) Int. Cl.: B60J 7/20

(54) **Flexible, insbesondere textile Abdeckung für den Verdeckkasten eines Cabriolets**

(30) Priorität: 23.06.1997 DE 19726577
(71) Anmelder: Bayerische Motoren Werke Aktiengesellschaft, 80788 München (DE)
(72) Erfinder: Schmitt, Andreas, 85386 Eching (DE); Kwasny, Uwe, 80687 München (DE); Wolfmaier, Christof, Prof. Dr.-Ing., 73614 Schorndorf (DE)

(57) **Zusammenfassung**

Textile Abdeckung für den Verdeckkasten (5) eines Cabriolets mit einem bezüglich des Fahrzeuges hinten fest angeschlagenem Faltverdeck, welches zumindest im wesentlichen im Verdeckkasten (5) verstaubar ist, wobei die textile Abdeckung (16) mittels eines Stellantriebes automatisch in die den Verdeckkasten (5) abdeckende oder für das Ausfahren oder Verstauen des Faltverdeckes freigebende Position verfahrbar ist, wozu zumindest eine fahrzeugfeste Führungsschiene (11) vorgesehen ist, mit Hilfe derer ein die Abdeckung (16) tragendes Rahmenteil (6) über das im verstauten Zustand gegebenenfalls teilweise aus dem Verdeckkasten herausragende Faltverdeck bewegt wird. Das die Abdeckung tragende Rahmenteil (6) besteht unter anderem aus einem sich quer zur Fahrzeuglängsachse ersteckenden Rahmenmittelteil (6a), welches sich in der den Verdeckkasten (5) abdeckenden Position im Bereich der bezüglich der Fahrzeuges hinteren Oberkante des Verdeckkastens (5) befindet. An die beiden Enden des Rahmenmittelteiles (6a) kann sich jeweils über ein Gelenk ein teleskopartig ausgebildeter Seitenrahmen (6b) anschließen, dessen anderes Ende gelenkig an eine B-Säulen-Klappe (7), welche verschwenkbar ist und der bereichsweisen Abdeckung des Verdeckkastens (5) dient, angebunden ist.

## Beschreibung

Die Erfindung betrifft eine flexible, insbesondere textile Abdeckung für den Verdeckkasten eines Cabriolets mit einem bezüglich des Fahrzeuges hinten fest angeschlagenem Faltverdeck, welches zumindest im wesentlichen im Verdeckkasten verstaubar ist.
Die einfachste Lösung, ein hinten fest angeschlagenes Faltverdeck eines Cabriolets und insbesondere ein Faltverdeck ohne Spannbügel bei geöffnetem Zustand in einem Verdeckkasten verstaut abzudecken, liegt in der Verwendung einer sogenannten Persenning. Eine derartige flexible, im folgenden als textile Abdeckung bezeichnete Persenning wird bislang manuell über den Verdeckkasten gestülpt und an geeigneten Befestigungspunkten der Fahrzeugkarosserie aufgeknöpft. Diese manuelle Handhabung ist jedoch zum einen gewöhnungsbedürftig, ferner insbesondere im Falle eines automatischen Verdeckantriebes unkomfortabel, da dann trotz des automatischen Verdeckantriebes zusätzliche manuelle Tätigkeiten erforderlich sind. Zudem wird die Persenning bei geschlossenem Verdeck häufig im Kofferraum des Cabriolets untergebracht und benötigt somit zusätzlichen Stauraum wobei gleichzeitig der Verdeckkasten unerwünschtermaßen offen bleibt.

Demgegenüber Verbesserungen aufzuzeigen, ist Aufgabe der vorliegenden Erfindung.
Die Lösung dieser Aufgabe ist dadurch gekennzeichnet, daß die flexible, insbesondere textile Abdeckung mittels eines Stellantriebes automatisch in die den Verdeckkasten abdeckende oder für das Ausfahren oder Verstauen des Faltverdeckes freigebende Position verfahrbar ist, wozu zumindest eine fahrzeugfeste Führungsschiene vorgesehen ist, mit Hilfe derer ein die Abdeckung tragendes Rahmenteil über das im verstauten Zustand gegebenenfalls teilweise aus dem Verdeckkasten herausragende Faltverdeck bewegt wird. Vorteilhafte Aus- und Weiterbildungen sind Inhalt der Unteransprüche.

Näher erläutert wird die Erfindung anhand eines bevorzugten Ausführungsbeispieles. Dabei zeigt
- Figur 1: die Perspektivansicht des linken hinteren Seitenbereiches eines Cabriolets mit einer erfindungsgemäßen Abdeckung für den Verdeckkasten des Cabriolet-Faltverdeckes,
- Figur 2: in einer Perspektivdarstellung lediglich das sogenannte Rahmenmittelteil, welches die nicht gezeigte textile Abdeckung trägt, inklusive des zugehörigen Betätigungsmechanismus,
- Figur 3: die schematische Darstellung der Kinematik des Rahmenmittelteiles in einer Seitenansicht, sowie
- Figur 4: in einer Perspektivdarstellung die sich an den Seitenrahmen anschließende sogenannte B-Säulen-Klappe.

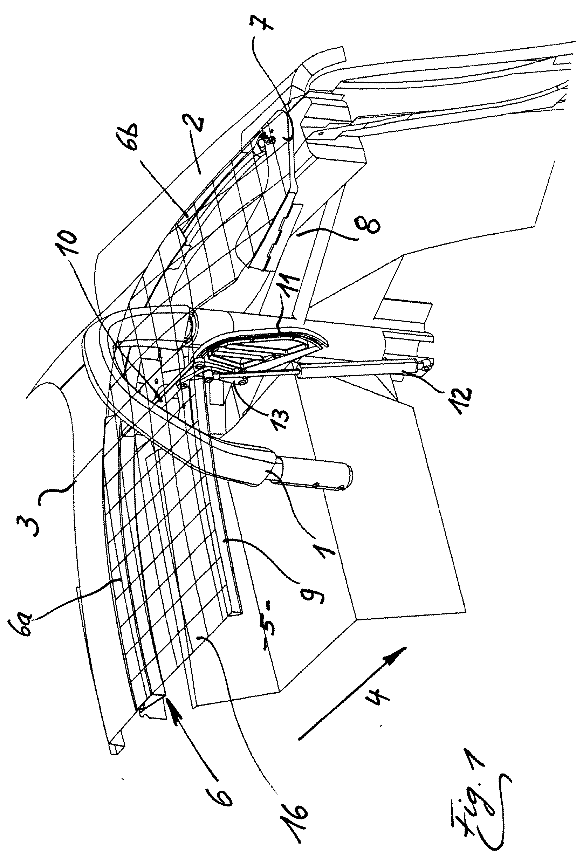

Figur 1 zeigt die für das Verständnis der vorliegenden Erfindung erforderlichen Teile in der Umgebung des Verdeckkastens im linken hinteren Eckbereich eines Cabriolets. Man erkennt den mit der Bezugsziffer 1 bezeichneten Überrollbügel, der sich hinter dem nicht gezeigten Sitz für einen auf der linken Seite des Cabriolets sitzenden Passagier befindet. Die abschnittsweise dargestellte linke Seitenbrüstung des Cabriolets trägt die Bezugsziffer 2, während eine die linksseitige Seitenbrüstung 2 mit der nicht gezeigten rechtsseitigen Seitenbrüstung 3 verbindende Querstrebe (auch Heckfensterrahmen unten genannt), die ebenfalls Bestandteil der Fahrzeug-Karosserie ist, mit der Bezugsziffer 3 bezeichnet ist. In Fahrzeug-Fahrtrichtung - diese entspricht der Pfeilrichtung 4 und ist selbstverständlich parallel zur Fahrzeuglängsachse - befindet sich vor der Querstrebe 3 ein sogenannter Verdeckkasten 5, in welchem ein nicht gezeigtes Faltverdeck abgelegt werden kann. Dieses Faltverdeck ist bezüglich der Fahrzeug-Fahrtrichtung 4 hinten angeschlagen, d. h. das Faltverdeck ist im Bereich der Querstrebe 3 an der Karosserie befestigt und kann automatisch aus dem Verdeckkasten 5 herausgefahren und in die geschlossene Position gebracht werden. Wird das Cabriolet offen gefahren, so wird das Faltverdeck im Verdeckkasten 5 abgelegt und mit einer der Übersichtlichkeit halber in den meisten Figurendarstellungen nicht gezeigten flexiblen, insbesondere textilen Abdeckung 16 abgedeckt. Dies ist soweit allgemein üblicher Stand der Technik, wobei diese im weiteren lediglich als textile Abdeckung 16 bezeichnete flexible Abdeckung 16 üblicherweise als Persenning bezeichnet wird.

Hier nun ist vorgesehen, diese Persenning oder textile Abdeckung 16 automatisch zu bewegen. Hierzu wird die Abdeckung 16 von einem in seiner Gesamtheit mit 6 bezeichneten Rahmenteil getragen. Bestandteil dieses Rahmenteiles 6 sind ein Rahmenmittelteil 6a, welches sich im wesentlichen quer zur Fahrzeuglängsachse erstreckt und sich in der den Verdeckkasten 5 abdeckenden Position - diese ist in Figur 1 dargestellt - im Bereich der bezüglich des Fahrzeuges hinteren Oberkante des Verdeckkastens 5 befindet. An die beiden Enden dieses Rahmenmittelteiles 6a schließt sich jeweils über ein nicht näher dargestelltes Kugelgelenk ein teleskopartig ausgebildeter Seitenrahmen 6b an. Jeder Seitenrahmen 6b liegt ebenfalls im bezüglich der Fahrtrichtung hinteren oberen Bereich des Verdeckkastens 5, folgt dabei jedoch dem Verlauf der hinteren bzw. äußeren Oberkante des Verdeckkastens 5, der sich -wie ersichtlich- auch teilweise noch längs der linken Seitenbrüstung 2 fortsetzt. Tatsächlich erstreckt sich der Verdeckkasten 5 über eine gewisse Breite auch so weit in Fahrtrichtung 4 nach vorne, bis dessen vorderster Endabschnitt von der mit der Bezugsziffer 7 bezeichneten sogenannten B-Säulen-Klappe abgedeckt wird. In diesem seitlichen hinteren Bereich des Verdeckkastens 5 ist der hintere Seitenabschnitt des Faltverdeckes sowie das zugehörige Verdeckgestänge untergebracht, wenn sich dieses Faltverdeck in seiner Offenposition befindet. Nach vorne hin abgeschlossen ist in diesem Seitenbereich des Fahrzeuges der Verdeckkasten 5 dabei von einer Begrenzungswand 8, wobei auf der Oberkante dieser Begrenzungswand 8 die B-Säulen-Klappe 7 zum Aufliegen kommt.

Die in Figur 1 durch ein Rechteckmuster symbolisierte flexible, textile Abdeckung 16 ist nicht nur mit dem Rahmenmittelteil 6a, sondern auch mit den beiden Seitenrahmen 6b sowie selbstverständlich auch mit den beiden B-Säulen-Klappen 7 verbunden. Dies reicht jedoch nicht aus, um die textile Abdeckung 16 bzw. Persenning sauber über dem im Verdeckkasten 5 abgelegten Faltverdeck zu halten. Vielmehr ist die textile Abdeckung/Persenning auch noch an einer Querleiste 9, die sich quer zur Fahrzeuglängsrichtung 4 erstreckt und hinter den (beiden) Überrollbügeln 1 vorgesehen ist, befestigt. Diese Querleiste 9 kann dabei auf geeignete Weise an der Karosserie des Fahrzeuges/Cabriolets befestigt sein.

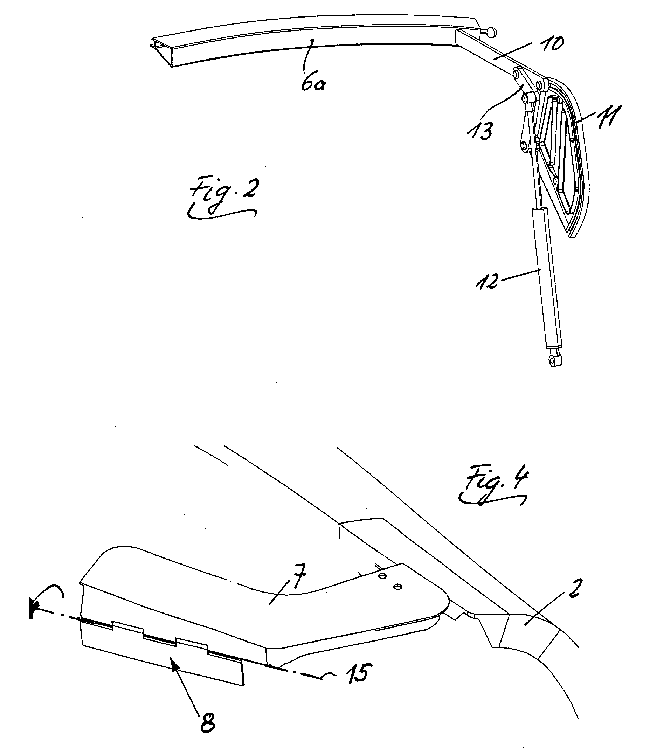

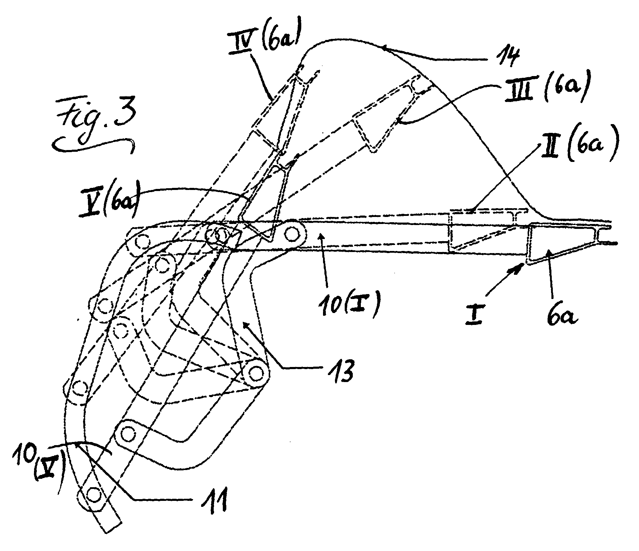

Figur 2 zeigt das Rahmenmittelteil 6a mit der zugehörigen Betätigungsvorrichtung im Detail. Wie ersichtlich trägt das Rahmenmittelteil 6a endseitig (und zwar an beiden Enden) je einen Längslenker 10, dessen freies Ende in einer eine gewünschte Bewegungsbahn erzeugenden Führungsschiene 11 geführt ist. Auf diese gewünschte Bewegungsbahn des Rahmenmittelteiles 6a wird später im Zusammenhang mit Figur 3 noch näher eingegangen. Erzielt wird diese an späterer Stelle noch näher erläuterte gewünschte Bewegungsbahn jedenfalls durch die Führungsschiene 11, die eine definierte Bewegung des Längslenkers 10 und somit auch des Rahmenmittelteiles 6a verursacht. Initiiert wird eine Bewegung des Rahmenmittelteiles 6a dabei durch einen insbesondere hydraulischen Stellzylinder 12, dessen an sich übliche Kolbenstange an einem Stellenker 13 angreift, der wiederum am Längslenker 10 des Rahmenmittelteiles 6a verschwenkbar angelenkt ist. Mit seinem anderen Ende ist der Stellenker 13 karosseriefest, jedoch selbstverständlich weiterhin verschwenkbar angebunden, so beispielsweise an einer Führung für den Überrollbügel 1 (nicht gezeigt).

Anhand von Figur 3 wird nun die gewünschte Bewegungsbahn des Rahmenmittelteiles 6a erläutert. In dieser Figur 3 sind das Rahmenmittelteil 6a, der Längslenker 10 sowie der Stellenker 13 jeweils in verschiedenen, mit den römischen Ziffern I bis V bezeichneten Positionen dargestellt. Die Position I entspricht der geschlossenen Position, d. h. derjenigen Position, in welcher der Verdeckkasten 5 abgedeckt ist. Die Position V entspricht der vollständig aufgedeckten Stellung, d. h. in dieser Position 5 kann das (nicht dargestellte) Faltverdeck aus dem Verdeckkasten 5 ausgefahren oder in diesen hineingefahren werden. Nun ist es bei Cabriolets mit Falterverdecken aber üblich - und auch beim hier erläuterten Ausführungsbeispiel vorgesehen -, daß dieses Faltverdeck bei im Verdeckkasten 5 verstauten Zustand teilweise über die Oberkante des Verdeckkastens 5 hinausragt. Aus diesem Grunde ist es nicht möglich, eine textile Abdeckung bzw. Persenning zum Öffnen des Verdeckkastens 5 einfach in horizontaler Richtung, d. h. gemäß Pfeilrichtung 4 in Figur 1 über die Verdeckkastenoberfläche hinwegzuschieben, sondern es ist erforderlich, die textile Abdeckung zusätzlich anzuheben.

Das Rahmenmittelteil 6a muß somit eine Bewegung ausführen, wie diese durch die unterschiedlichen Positionen I bis V dargestellt ist, bzw. die hintere Oberkante des Rahmenmittelteiles 6 muß auf der mit der Bezugsziffer 14 bezeichneten Bewegungsbahn geführt werden. Ermöglicht wird dies nun durch die auch in Figur 3 dargestellte Führungsschiene 11, in welcher der Längslenker 10 im Zusammenwirken mit dem Stellenker 13 geführt ist. Im übrigen ermöglicht es dieser dargestellte Bewegungsablauf längs der Bewegungsbahn 14 nicht nur, die textile Abdeckung, die wie bereits erläutert durch das Rahmenteil 6 bzw. das Rahmenmittelteil 6a geführt wird, über ein geringfügig aus dem Verdeckkasten herausstehendes Faltverdeck zu bewegen, sondern es ist aufgrund dieser Bewegungsbahn 14 auch möglich, die textile Abdeckung/Persenning wieder über den Verdeckkasten 5 zu legen bzw. den Verdeckkasten 5 abzudecken, nachdem das Faltverdeck in seine geschlossene Position gebracht wurde.

Zurückkommend auf Figur 1 erkennt man, daß es der geschilderte Bewegungsablauf des Rahmenteiles 6a erforderlich macht, den Seitenrahmen 6b teleskopartig auszubilden. In anderen Worten bedeutet dies, daß dieser Seitenrahmen 6b aus zwei relativ zueinander bzw. ineinander verschiebbaren Abschnitten besteht, so daß die Gesamtlänge des gebogenen Seitenrahmens 6b veränderbar ist. Hierfür ist es erforderlich, daß die beiden ineinander verschiebbaren Abschnitte des Seitenrahmens 6b längs einer planaren Kreisbahn angeordnet sind bzw. derart ausgebildet sind, daß das beschriebene teleskopartige Ineinanderschieben trotz der kreisförmigen Krümmung ermöglicht wird.
Weiterhin ist es erforderlich, den Seitenrahmen 6b über ein Gelenk mit dem Rahmenmittelteil 6a zu verbinden, wobei dieses beispielsweise als Kugelgelenk ausgebildete Gelenk jedoch nicht näher dargestellt ist.

Zusätzlich verbunden ist jeder Seitenrahmen 6b im übrigen mit seinem dem Rahmenmittelteil 6a abgewandten Ende mit der in Figur 4 nochmals detailliert dargestellten B-Säulen-Klappe 7, und zwar abermals über ein Gelenk, welches als Kardangelenk ausgebildet sein kann.

Wie bereits eingangs erläutert, dient die B-Säulen-Klappe 7 dazu, den vorderen Bereich des Verdeckkastens 5 abzudecken, so daß zum Ausfahren des Faltverdeckes aus dem Verdeckkasten sowie zum Verstauen desselben im Verdeckkasten 5 die B-Säulen-Klappe 7 aufgeschwenkt werden muß. Dies erfolgt um die in Figur 4 mit der Bezugsziffer 15 bezeichnete Schwenkachse, welche im wesentlichen parallel zur vorderen inneren seitlichen Kontur des Verdeckkastens 5 (und in grober Näherung in Richtung der Fahrzeuglängsachse 4) verläuft. Die Verschwenkbewegung der B-Säulen-Klappe 7 wird dabei durch das Verdeckgestänge des Faltverdeckes bzw. durch das Faltverdeck selbst initiiert. Da weiterhin, wie erwähnt, der Seitenrahmen 6b gelenkig an diese B-Säulen-Klappe 7 angebunden ist, wird durch ein Verschwenken der B-Säulen-Klappe 7 auch der Seitenrahmen 6b in der gewünschten Weise bewegt.

Wie bereits erwähnt, ist die textile Abdeckung 16 bzw. die Persenning unter anderem am Rahmenmittelteil 6a, an der Querleiste 9 sowie an der B-Säulen-Klappe 7 befestigt, und zwar jeweils bevorzugt unlösbar. Es handelt sich somit um eine feste Verbindung, die beispielsweise als Klebeverbindung ausgebildet sein kann. Ebenfalls verbunden sein muß die textile Abdeckung/Persenning zur optimalen Führung derselben jedoch mit den beiden Seitenrahmen 6b, wobei diese Verbindung an geeigneten Stellen des Seitenrahmens 6b ebenfalls unlösbar ausgebildet sein kann. Dann wird die textile Abdeckung 16 bei einer Verschwenkbewegung des Rahmenteiles 6 in diesem Bereich in sich gefaltet.
In einer alternativen Ausführungsform kann diese Verbindung zwischen Abdeckung 16 und Rahmenseitenteil 6b aber auch lose ausgeführt sein, damit beim Bewegungsablauf, bei welchem sich, wie bereits geschildert, jeder Seitenrahmen 6b teleskopartig zusammen- bzw. auseinanderschiebt, sich auch die textile Abdeckung in entsprechender Weise bewegen kann. Ähnlich dem Gardinenprinzip soll somit die textile Abdeckung auf jedem Seitenrahmen 6b zusammengeschoben bzw. auseinandergezogen werden können.

Insgesamt ist durch die vorliegende Erfindung einer automatisch verfahrbaren Persenning bzw. textilen Abdeckung 16 für den Verdeckkasten 5 somit eine vollautomatische Verdeckkastenabdeckung für hinten fest angeschlagene Verdecke realisiert, was äußerst bedienungsfreundlich ist. Bei geschlossenem Verdeck kann diese Abdeckung 16 dabei den Verdeckkasten 5 abdecken, der wiederum als Stauraum genutzt werden kann. Wie anhand des beschriebenen Ausführungsbeispieles erläutert, besteht diese verfahrbare Persenning bzw. verfahrbare flexible, textile Abdeckung 16 somit aus dem beweglichen Rahmenteil 6, auf das -zusätzlich zur Querleiste 9- die textile Abdeckung 16 aufgespannt ist. Die gewünschte Bewegung des verschiebbaren Rahmenteiles 6 wird dabei durch die Stellenker 13 sowie die Führungsschienen 11 realisiert.

Ausgehend vom im Verdeckkasten 5 abgelegten Verdeck sowie einer geschlossen textilen Abdeckung/Persenning wird, wie erläutert, zunächst das Rahmenmittelteil 6a nach vorne gefahren, wobei sich die textile Abdeckung 16 in diesem Bereich zwischen dem Rahmenteil 6 sowie der Querleiste 9 faltet. Der Seitenrahmen 6b schiebt sich zusammen, wodurch sich die textile Abdeckung in diesem Bereich zwischen die B-Säulen-Klappe 7 und den hinteren Abschnitt des Seitenrahmens 6b faltet. Anschließend kann das Verdeck aus dem Verdeckkasten herausgefahren werden, wobei die B-Säulen-Klappen 7 hochgeklappt werden. Ist das Faltverdeck geschlossen, so fährt das Rahmenmittelteil 6a gegen Pfeilrichtung 4 wieder nach hinten, bis es an den Stoff des geschlossenen Verdecks anstößt. Dabei bleiben die B-Säulen-Klappen 7 hochgeklappt stehen. In dieser Stellung ist nun der leere Verdeckkasten 5 von der Persenning/textilen Abdeckung 16 abgedeckt. Nachdem der Seitenrahmen 6b im übrigen durch die Bewegungen des Rahmenmittelteiles 6a sowie durch die B-Säulen-Klappen 7 zwangsgeführt ist, istgewährleistet, daß sich dieser Seitenrahmen 6b und somit auch die darauf befindliche textile Abdeckung 16 in der jeweiligen Endposition genau am Verdeckkastenrand ablegt. Es sei noch darauf hingewiesen, daß selbstverständlich eine Vielzahl von Details insbesondere konstruktiver Art durchaus abweichend vom gezeigten Ausführungsbeispiel gestaltet sein können, ohne den Inhalt der Patentansprüche zu verlassen.

## Patentansprüche

1. Flexible, insbesondere textile Abdeckung für den Verdeckkasten (5) eines Cabriolets mit einem bezüglich des Fahrzeuges hinten fest angeschlagenem Faltverdeck, welches zumindest im wesentlichen im Verdeckkasten (5) verstaubar ist,
dadurch gekennzeichnet, daß die flexible, insbesondere textile Abdeckung (16) mittels eines Stellantriebes automatisch in die den Verdeckkasten (5) abdeckende oder für das Ausfahren oder Verstauen des Faltverdeckes freigebende Position verfahrbar ist, wozu zumindest eine fahrzeugfeste Führungsschiene (11) vorgesehen ist, mit Hilfe derer ein die Abdeckung (16) tragendes Rahmenteil (6) über das im verstauten Zustand gegebenenfalls teilweise aus dem Verdeckkasten (5) herausragende Faltverdeck bewegt wird.

2. Verdeckkasten-Abdeckung nach Anspruch 1,
dadurch gekennzeichnet, daß das die Abdeckung (16) tragende Rahmenteil (6) aus einem sich quer zur Fahrzeuglängsachse (4) ersteckenden Rahmenmittelteil (6a) besteht, welches sich in der den Verdeckkasten (5) abdeckenden Position im Bereich der bezüglich der Fahrzeuges hinteren Oberkante des Verdeckkastens (5) befindet.

3. Verdeckkasten-Abdeckung nach Anspruch 1 oder 2,
dadurch gekennzeichnet, daß sich an die beiden Enden des Rahmenmittelteiles (6a) jeweils über ein Gelenk ein teleskopartig ausgebildeter Seitenrahmen (6b) anschließt, dessen anderes Ende gelenkig an eine B-Säulen-Klappe (7), welche um eine im wesentlichen parallel zur vorderen inneren seitlichen Kontur des Verdeckkastens (5) verlaufende Schwenkachse (15) verschwenkbar ist und der bereichsweisen Abdeckung des Verdeckkastens (5) dient, angebunden ist.

4. Verdeckkasten-Abdeckung nach einem der vorangegangenen Ansprüche,
dadurch gekennzeichnet, daß die flexible, insbesondere textile Abdeckung (16) mit dem Rahmenmittelteil (6a), mit den beiden B-Säulen-Klappen (7), sowie mit einer im Bereich der bezüglich des Fahrzeuges vorderen Verdeckkasten-Oberkante vorgesehenen Querleiste (9) fest verbunden ist.

5. Verdeckkasten-Abdeckung nach einem der vorangegangenen Ansprüche,
dadurch gekennzeichnet, daß die flexible, insbesondere textile Abdeckung (16) bereichsweise mit den beiden Seitenrahmen (6b) fest verbunden ist.

6. Verdeckkasten-Abdeckung nach einem der vorangegangenen Ansprüche,
dadurch gekennzeichnet, daß das Rahmenmittelteil (6a) endseitig Längslenker (10) trägt, deren freie Enden jeweils in der eine gewünschte Bewegungsbahn (14) erzeugenden Führungsschiene (11) geführt sind.

7. Verdeckkasten-Abdeckung nach Anspruch 6,
dadurch gekennzeichnet, daß zumindest an einem Längslenker (10) schwenkbar ein Stellenker (13) angelenkt ist, an welchem ein insbesondere hydraulischer Stellzylinder (12) zur Bewegung des Rahmenmittelteiles (6a) angreift.

8. Verdeckkasten-Abdeckung nach einem der vorangegangenen Ansprüche,
dadurch gekennzeichnet, daß die B-Säulen-Klappen (7) durch die Bewegung des Faltverdeckes und insbesondere durch dessen Verdeckgestänge zwangsbewegt werden.
